# EUROPÄISCHE PATENTSCHRIFT

(11) **EP 1 597 892 B1**
(45) Veröffentlichungstag und Bekanntmachung des Hinweises auf die Patenterteilung: **12.07.2006**
(21) Anmeldenummer: 03816026.3
(22) Anmeldetag: 19.12.2003
(51) Int. Cl.: H04L 29/06

(54) **Verfahren zur übertragung von Daten in einem WLAN-Netz**
Method for transmitting data in WLAN network
Procédé de tranmission de données dans un réseau WLAN

(30) Priorität: 28.02.2003 DE 10308935
(43) Veröffentlichungstag der Anmeldung: 23.11.2005
(73) Patentinhaber: SIEMENS AKTIENGESELLSCHAFT, 80333 München (DE)
(72) Erfinder: GRIMMINGER, Jochen, 80638 München (DE); KRÖSELBERG, Dirk, 80469 München (DE)
(86) Internationale Anmeldenummer: PCT/DE2003/004220
(87) Internationale Veröffentlichungsnummer: WO 2004/077783

(56) Entgegenhaltungen:
- US-A1- 2001 032 262
- US-A1- 2003 026 232
- SRINIVAS, CHAN, SENGODAN, COSTA-REQUENA: "draft-srinivas-aaa-basic-digest-00: Mapping of Basic and Digest Authentication to DIAMETER AAA Messages" INTERNET DRAFT, - 13. Juli 2001 (2001-07-13) Seiten 1-23, XP002279176
- BYERLY, WILLIAMS : "draft-byerly-sip-radius-00: SIP Authentication using CHAP-Password" INTERNET DRAFT, - Oktober 2000 (2000-10) Seiten 1-12, XP002279177
- STERMAN, SADOLEVSKY, SCHWARTZ, WILLIAMS: "draft-sterman-aaa-sip-00: RADIUS Extension for Digest Authentication" INTERNET DRAFT, - 12. November 2001 (2001-11-12) Seiten 1-9, XP002279178
- AKI NIEMI: "Authentication, Authorization and Accounting in Session Initiation Protocol Networks" THESIS HELSINKI UNIVERSITY OF TECHNOLOGY, XX, XX, 7. März 2002 (2002-03-07), Seite COMPLETE91 XP002276254
- HANDLEY, JACOBSON: "RFC 2327: SDP: Session Description Protocol" REQUEST FOR COMMENTS, - April 1998 (1998-04) Seiten 1-42, XP002279253

## Beschreibung

Die Erfindung betrifft ein Verfahren zur Übertragung von Daten in einem WLAN-Netz sowie eine entsprechende Vorrichtung zur Übertragung solcher Daten und ein entsprechendes Datennetz.

Seit einigen Jahren verbreitet sich immer mehr die Übertragung von Daten via drahtlosen WLAN-Netzen. WLAN steht für "Wireless Local Area Network" und bezeichnet ein lokales drahtloses Netz mit Reichweiten von einigen hundert Metern. Mittlerweile besteht für die Benutzer von Endgeräten, insbesondere von Mobilfunkgeräten und Lapteps, die Möglichkeit, sich an beliebigen Orten in kommerziell betriebene WLAN-Netze einzubuchen. Der Benutzer kann hierbei über sein Endgerät eine Vielzahl von WLAN-Netzen orten, wobei jedes WLAN-Netz sogenannte Zugangsknoten (üblicherweise als Access Points bezeichnet) umfasst, über die sich der Benutzer Zugang zu weiteren Datennetzen, insbesondere zum Internet oder UMTS-Netzen, verschaffen kann.

Bei der Übermittlung von Nachrichten in einem WLAN-Netz kann es sich als vorteilhaft erweisen, dass in der L2-Protokoll-Schicht (L2 = Layer 2) Authentifizierungsdaten übertragen werden, die in SIP-Nachrichten (SIP = Session Initiation Protocol) integriert sind. Das SIP-Protokoll ist hinlänglich aus dem Stand der Technik bekannt (siehe [1]) und wird insbesondere in IP-basierten Netzen zur Initialisierung einer Protokollsitzung verwendet. Unter dem Begriff SIP fallen hierbei SIP-Protokolle. Durch die Verwendung des SIP-Protokolls kann eine Authentifizierung eines Endgeräts an einem Zugangsknoten und in mit dem Zugangsknoten verbundenen Datennetzen durchgeführt werden, so dass eine verschlüsselte Übertragung von Nachrichten ermöglicht wird. Nachteilhaft ist jedoch, dass die weiteren Datennetze, mit denen sich der WLAN-Zugangsknoten verbinden kann, üblicherweise RADIUS- und/oder Diameter-Server zur Authentifizierung verwenden, wobei diese Server nicht das SIP-Protokoll verstehen. In solchen Fällen ist eine weitergehende Authentifizierung über den Zugangsknoten hinaus in anderen Datennetzen nicht möglich. Das RADIUS- und das Diameter-Protokoll sind hinlänglich aus dem Stand der Technik bekannt (siehe [2] und [3]). Das RADIUS-Protokoll (RADIUS=Remote Authentication Dial in User Service) gehört insbesondere zu den offiziellen AAA-Protokollen (AAA = Authentication, Authorization, Accounting) der "Internet Engineering Task Force" (IETF).

Die Verwendung von SIP-Nachrichten, die Authentifizierungsdaten enthalten, ist aus dem Dokument draft-srinivas-aaa-basic-digest-00 bekannt.

Aufgabe der Erfindung ist es deshalb, ein Verfahren zur Übertragung von Daten in einem WLAN-Netz bereitzustellen, bei dem die Authentifizierung mittels SIP-Authentifizierungsdaten innerhalb des RADIUS- und/oder Diameter-Protokolls möglich ist.

Diese Aufgabe wird durch die unabhängigen Patentansprüche gelöst. Weiterbildungen der Erfindung ergeben sich aus den abhängigen Ansprüchen.

In dem Verfahren werden WLAN-Nachrichten in der L2-Protokoll-Schicht zwischen einem Endgerät und einem Zugangsknoten des WLAN-Netzes übertragen, wobei der Zugangsknoten mit einem oder mehreren Datennetzen verbindbar ist. Die mit dem Verfahren übertragenen WLAN-Nachrichten beinhalten SIP-Nachrichten mit SIP-Authentifizierungsdaten, wobei die SIP-Authentifizierungsdaten aus in dem Zugangsknoten ankommenden WLAN-Nachrichten extrahiert werden und als Authentifizierungsdaten in Nachrichten des RADIUS- und/oder Diameter-Protokolls integriert werden.

Der besondere Vorteil der Erfindung liegt darin, dass heutzutage in Datennetzen noch sehr oft RADIUS- und/oder Diameter-Protokolle zur Authentifizierung eingesetzt werden und somit mit dem Verfahren eine Authentifizierung sowohl in einem WLAN-Netz als auch in mit dem WLAN-Netz verbundenen Datennetzen, die das RADIUS- und/oder Diameter-Protokoll verwenden, gewährleistet ist.

In einer bevorzugten Ausführungsform der Erfindung werden die in dem RADIUS- und/der Diameter-Protokoll integrierten Authentifizierungsdaten in einem mit dem WLAN-Netz verbindbaren Datennetz zu einem RADIUS- und/oder Diameter-Server übertragen, der diese Authentifizierungsdaten dann verarbeiten kann. Vorzugsweise werden auch umgekehrt Authentifizierungsdaten des RADIUS- und/oder Diameter-Protokolls, die aus einem mit dem WLAN-Netz verbindbaren Datennetz im Zugangsknoten ankommen, als SIP-Authentifi-zierungsdaten in SIP-Nachrichten integriert und an das Endgerät übertragen. Somit ist eine Authentifizierung zwischen einem Endgerät des WLAN-Netzes und einem entfernten RADIUS- und/oder Diameter-Server eines weiteren Datennetzes möglich.

Die Extraktion der SIP-Authentifizierungsdaten erfolgt vorzugsweise in einem oder mehreren SIP-Proxy-CSCF- und RADIUS- und/oder Diameter-Servern.

In einer weiteren bevorzugten Ausführungsform der Erfindung werden die SIP-Authentifizierungsdaten mit bekannten Authentifizierungsmechanismen, wie zum Beispiel Kerberos, Digest, AKA, USIM und ähnliche erzeugt.

Vorzugsweise beinhalten die WLAN-Nachrichten spezifische Nachrichten über mögliche Datenverbindungen des Endgeräts via dem Zugangsknoten zu mit dem WLAN-Netz verbindbaren Datennetzen. Hierdurch wird es ermöglicht, Anfragen bzw. Informationen betreffend mögliche Datenverbindungen an den Zugangsknoten bzw. an mit dem Zugangsknoten verbindbare Datennetze zu richten. Es kann somit vor der Initialisierung der Datenverbindung abgeklärt werden, ob eine vom Benutzer gewünschte Datenverbindung möglich ist bzw. welche Datenverbindungen überhaupt über das WLAN-Netz herstellbar sind.

In einer besonders bevorzugten Ausführungsform werden die spezifischen Nachrichten ausgewertet und in Abhängigkeit von der Auswertung wird entschieden, ob bzw. welche Datenverbindung des Endgeräts via dem Zugangsknoten zu einem oder mehreren der mit dem WLAN-Netz verbindbaren Datennetze zur Datenübertragung verwendet wird. Dem Benutzer des Endgeräts kann somit automatisiert die von ihm gewünschte Datenverbindung bereitgestellt werden bzw. dem Benutzer kann mitgeteilt werden, dass die für seine Zwecke erforderliche Datenverbindung überhaupt nicht über das WLAN-Netz möglich ist.

Die spezifischen Nachrichten beinhalten vorzugsweise Anfragen und/oder Informationen bezüglich einer oder mehrerer Datenverbindungsarten und/oder Datenverbindungsqualitäten und/oder Datenverbindungskosten und/oder von der Datenverbindung bereitgestellter Dienste. Dem Benutzer des Endgeräts wird somit eine Vielzahl von Entscheidungskriterien gegeben, nach denen er seine gewünschte Datenverbindung spezifizieren kann.

In einer besonders bevorzugten Ausführungsform sind die spezifischen Nachrichten in den WLAN-Nachrichten getunnelt. In einer weiteren besonders bevorzugten Ausführungsform werden die spezifischen Nachrichten innerhalb der SIP-Nachrichten übertragen, wobei die SIP-Nachrichten SDP-Nachrichten (SDP = Session Description Protocol) beinhalten, in denen wenigstens ein Teil der spezifischen Nachrichten gespeichert sind. Das SDP-Protokoll ist hinlänglich aus dem Stand der Technik bekannt (siehe [4]) und wird insbesondere in IP-basierten Netzen zur Beschreibung einer Protokollsitzung verwendet. Unter dem Begriff SDP fallen hierbei SDP-Protokolle. Bei der Verwendung von SIP/SDP-Nachrichten können die Nachrichten beispielsweise Probe-Request- und Probe-Response-Nachrichten des WLAN-Protokolls sein. Alternativ können die Nachrichten jedoch auch neu definierte Nachrichten im WLAN-Protokoll sein.

In der erfindungsgemäßen Verfahren sind die SIP-Nachrichten in EAP-Nachrichten enthalten (EAP = Extensible Authentification Protocol). Dieses Protokoll ist ebenfalls hinlänglich aus dem Stand der Technik bekannt (siehe beispielsweise [5]) und dient zur Bereitstellung von Authentifizierungsmechanismen bei einer Point-to-Point-Verbindung.

In einer besonders bevorzugten Ausführungsform entsprechen die WLAN-Nachrichten dem WLAN-Standard IEEE 802.11. Ferner umfassen die mit dem WLAN-Netz verbindbaren Datennetze einen oder mehrere 3GPP- und/oder IP-Netze.

Neben dem oben beschriebenen erfindungsgemäßen Übertragungsverfahren umfasst die Erfindung auch eine Vorrichtung zur Übertragung von Daten in einem WLAN-Netz, wobei die Vorrichtung beinhaltet:
- einen Zugangsknoten, wobei zwischen dem Zugangsknoten und einem Endgerät WLAN-Nachrichten in der L2-Protokoll-Schicht (L2 = Layer 2) übertragbar sind und die WLAN-Nachrichten SIP-Nachrichten mit SIP-Authentifizierungsdaten beinhalten,
- eine mit dem Zugangsknoten verbundene Recheneinheit zur Extraktion der SIP-Authentifizierungsdaten aus in dem Zugangsknoten ankommenden WLAN-Nachrichten und zur Integration der extrahierten SIP-Authentifizierungsdaten in Nachrichten des RADIUS- und/der Diameter-Protokolls.

In einer besonders bevorzugten Ausführungsform der erfindungsgemäßen Vorrichtung umfasst die Recheneinheit einen SIP-Proxy-CSCF-Server (CSCF = Call State Control Function) und einen RADIUS- und/oder Diameter-Server. Ferner ist die Recheneinheit vorzugsweise in dem Zugangsknoten integriert.

Darüber hinaus umfasst die Erfindung ein Datennetz mit einem WLAN-Netz und einem oder mehreren mit dem WLAN-Netz verbindbaren Netzen, wobei das WLAN-Netz derart ausgestaltet ist, dass das oben beschriebene erfindungsgemäße Verfahren durchgeführt wird.

Ausführungsbeispiele der Erfindung werden nachfolgend anhand der beigefügten Zeichnungen beschrieben.

Es zeigen:
- Figur 1: die schematische Darstellung eines Datennetzes, in dem das erfindungsgemäße Datenübertragungsverfahren durchführbar ist, und
- Figur 2: eine Skizze, welche die Übermittlung von SIP-Authentifizierungsdaten im SIP-Protokoll darstellt.

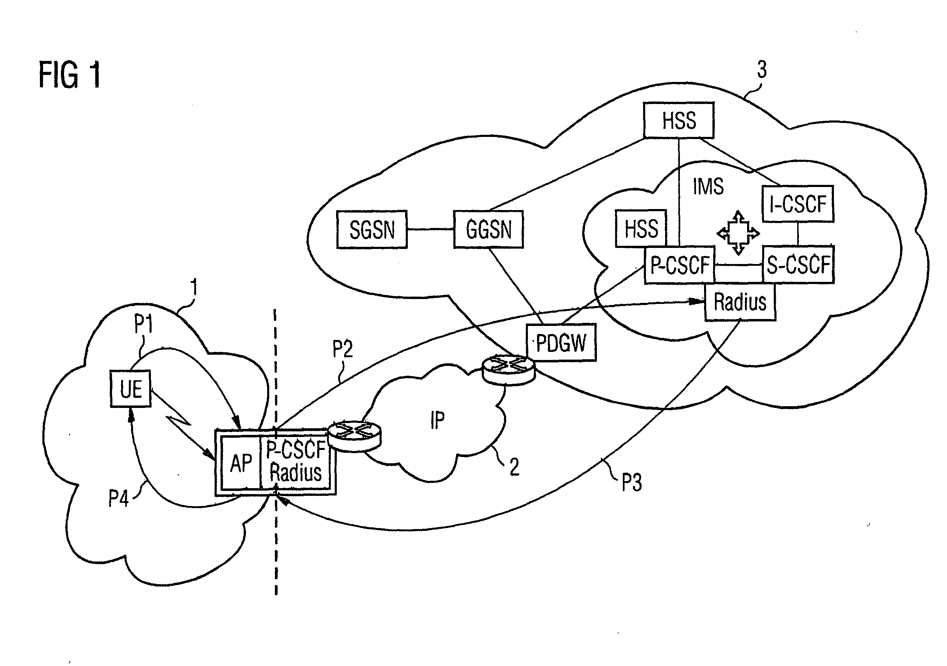

Das in Figur 1 schematisch dargestellte Datennetz umfasst ein WLAN-Netz 1, ein IP-Netz 2 sowie ein 3GPP-Netz 3. Ein Benutzerendgerät UE, welches beispielsweise ein Mobilfunkgerät oder ein Laptop sein kann, ist drahtlos (wie durch den gezackten Pfeil angedeutet) mit einem Zugangspunkt AP (AP = Access Point) des WLAN-Netzes verbunden. Der Zugangspunkt AP steht wiederum mit einem Proxy-CSCF-Server P-CSCF und einem RADIUS-Server Radius in Verbindung. Proxy-CSCF-Server sind bereits aus dem Stand der Technik bekannt und dienen zur Verarbeitung von SIP/SDP-Nachrichten. Ebenso sind RADIUS-Server aus dem Stand der Technik bekannt, wobei diese Server Nachrichten des RADIUS-Protokolls verarbeiten können.

Mit dem Zugangsknoten AP bzw. mit den P-CSCF/RADIUS-Servern ist das IP-Netz 2 verbunden. Dieses Netz ist wiederum mit dem 3GPP-Netz 3 verbunden. Das 3GPP-Netz umfasst neben einem weiteren RADIUS- und P-CSCF-Server eine Vielzahl von Komponenten mit den Bezeichnungen SGSN, GGSN, HSS, IMS, I-CSCF, S-CSCF sowie PDGW. Die mit diesen Abkürzungen bezeichneten Komponenten sind allseits bekannte Bausteine eines 3GPP-Netzes und die sich hinter den Abkürzungen verbergenden Ausdrücke sind dem Fachmann allgemein bekannt. Da für das erfindungsgemäße Verfahren der Aufbau des 3GPP-Netzes keine entscheidende Rolle spielt, wird im Folgenden auf diesen Aufbau nicht näher eingegangen. Es sei lediglich erwähnt, dass das IP-Netz über den Gateway PDGW mit dem 3GPP-Netz verbunden ist.

Bei dem erfindungsgemäßen Verfahren werden SIP-Authentifizierungsdaten über den Pfad P1 an den Zugangsknoten AP übertragen. Die Authentifizierungsdaten werden in den Servern P-CSCF und Radius, die mit dem Zugangsknoten AP verbunden sind, aus den SIP-Nachrichten extrahiert und in Nachrichten des RADIUS-Protokolls integriert. Diese Nachrichten können von dem Server Radius, der mit dem Zugangsknoten AP verbunden ist, verarbeitet werden und insbesondere über den Pfad P2 an einen weiteren RADIUS-Server weitergeleitet werden. Dieser weitere Radius-Server führt die Authentifizierung durch und sendet im RADIUS-Protokoll über den Pfad P3 eine Antwort zurück. Diese Antwort wird wiederum in den mit dem Zugangsknoten AP verbundenen RADIUS-Server verarbeitet, wobei die Authentifizierungsdaten des RADIUS-Protokolls nunmehr wieder in SIP-Nachrichten integriert werden, die von dem Server P-CSCF verarbeitbar sind. Die extrahierten Authentifizierungsdaten werden dann über den Pfad P4 an das Endgerät UE weitergeleitet und dort ausgewertet. Es kann somit mit dem erfindungsgemäßen Verfahren eine übergreifende Authentifizierung zwischen einem Endgerät im WLAN-Netz und einem RADIUS-Server in einem mit dem WLAN-Netz verbindbaren Netz durchgeführt werden. Insbesondere wird die Verarbeitung von SIP-Authentifizierungsdaten in Netzen gewährleistet, die eine Authentifizierung über das RADIUS-Protokoll durchführen.

In dem hier beschriebenen Ausführungsbeispiel des erfindungsgemäßen Verfahrens beinhalten die SIP-Nachrichten ferner SDP-Nachrichten, in denen Anfragen bzw. Informationen über mögliche Datenverbindungen des Endgeräts UE via dem Zugangsknoten AP zu dem IP-Netz und/oder dem 3GPP-Netz gespeichert sind.

Diese Anfragen bzw. Informationen können insbesondere einen Zugangswunsch beinhalten, der von dem Benutzer des Endgeräts festgelegt wird. Beispielsweise kann der Zugangswunsch die Art der Datenverbindung betreffen, mit der eine Datenübertragung via dem Zugangsknoten stattfinden soll. Zum Beispiel kann der Benutzer festlegen, dass die Datenverbin-dung über das Internet erfolgen soll. Ferner kann eine solche Anfrage eine vom Benutzer erwünschte Bandbreite bzw. ein Delay oder Jitter der Datenverbindung betreffen. Es ist somit eine Auswahl des Providers, beispielsweise in fremden ausländischen Netzen, nach vorbestimmten Kriterien möglich.

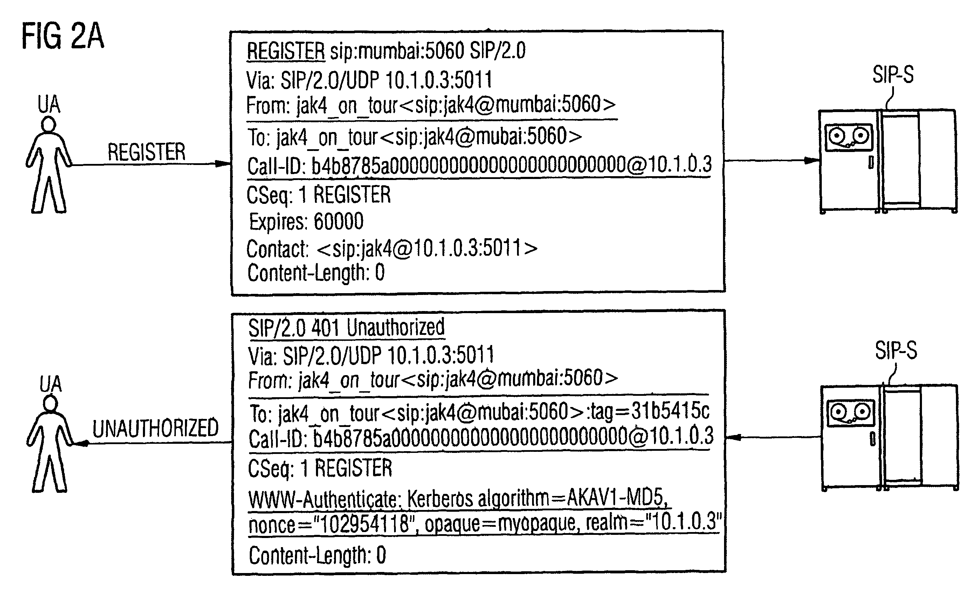

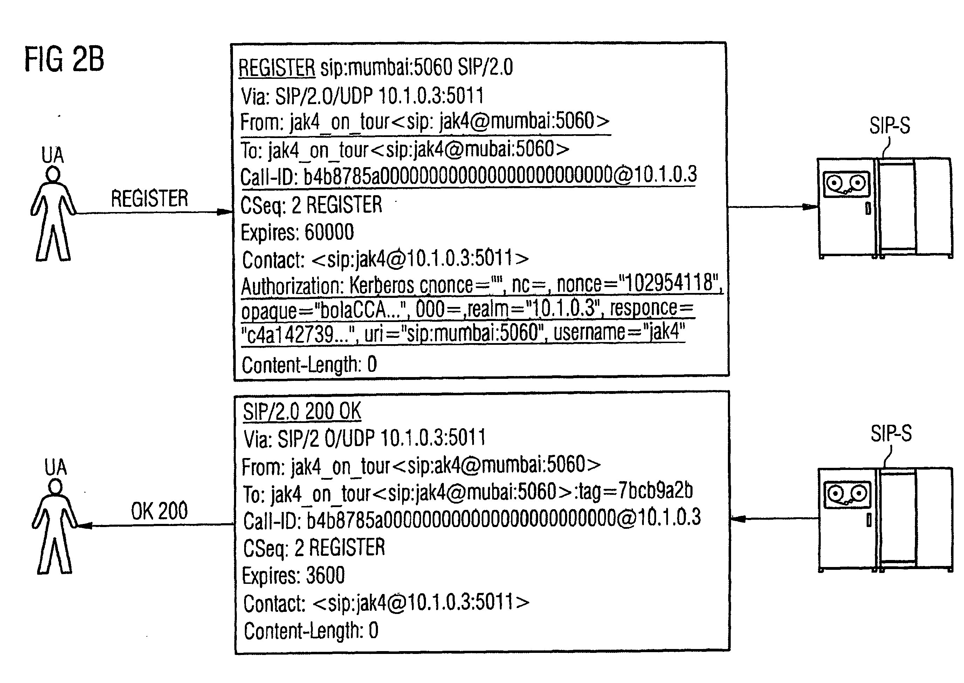

In Figur 2 ist schematisch die Übertragung von SIP-Nachrichten mit SIP-Authentifizierungsdaten von einem User-Agent UA, der beispielsweise in einem Endgerät integriert ist, zu einem SIP-Server SIP-S dargestellt. In Figur 2 sind die SIP-Authentifizierungsdaten, die bei der Authentifizierung ausgetauscht werden, unterstrichen. Diese Authentifizierungsdaten sind dem Fachmann hinlänglich bekannt, so dass nicht näher auf deren Bedeutung eingegangen wird. Das erfindungsgemäße Verfahren zeichnet sich dadurch aus, dass die SIP-Authentifizierungsdaten der SIP-Nachrichten extrahiert werden und in Nachrichten des RADIUS- und/oder Diameter-Protokolls integriert werden.

Bei der in Figur 2 dargestellten Authentifizierung wird der bereits aus dem Stand der Technik bekannte Authentifizierungsmechanismus Kerberos verwendet. Es können jedoch auch andere bekannte Authentifizierungsmechanismen, wie zum Beispiel Digest oder USIM eingesetzt werden. Statt einer Extraktion der SIP-Authentifizierungsdaten wäre es im Extremfallfall auch möglich, die gesamte SIP-Nachricht über das RADIUS- und/oder Diameter-Protokoll zu transportieren, ohne einzelne Bestandteile herauszunehmen.

Literaturverzeichnis:
[1] http://www.ietf.org/rfc/rfc3261.txt
[2] http://www.ietf.org/rfc/rfc2865.txt
[3] http://www.ietf.org/internet-drafts/draft-ietf-aaa-diameter-17.txt
[4] http://www.ietf.org/rfc/rfc2327.txt
[5] http://www.ietf.org/rfc/rfc2284.txt

## Patentansprüche

1. Verfahren zur Übertragung von Daten in einem WLAN-Netz (1), bei dem
- WLAN-Nachrichten in der Layer 2-Protokoll-Schicht zwischen einem Endgerät (UE) und einem Zugangsknoten (AP) des WLAN-Netzes (1) übertragen werden, wobei der Zugangsknoten (AP) mit einem oder mehreren Datennetzen (2, 3) verbindbar ist;
- die WLAN-Nachrichten SIP-Nachrichten, Session Initiation Protocol Nachrichten, mit SIP-Authentifizierungsdaten beinhalten, wobei die SIP-Nachrichten in EAP-Nachrichten, Extensible Authentification Protocol Nachrichten, enthalten sind;
- die SIP-Authentifizierungsdaten aus in dem Zugangsknoten (AP) ankommenden WLAN-Nachrichten extrahiert werden und als Authentifizierungsdaten in Nachrichten des RADIUS- und/oder Diameter-Protokolls integriert werden.

2. Verfahren nach Anspruch 1, bei dem die in dem RADIUS- und/oder Diameter-Protokoll integrierten Authentifizierungsdaten in einem mit dem WLAN-Netz (1) verbindbaren Datenetz (2, 3) zu einem RADIUS- und/oder Diameter-Server übertragen werden.

3. Verfahren nach Anspruch 1 oder 2, bei dem Authentifizierungsdaten des RADIUS- und/oder Diameter-Protokolls, die aus einem mit dem WLAN-Netz verbindbaren Datennetz im Zugangsknoten (AP) ankommen, in SIP-Nachrichten als SIP-Authentifizierungsdaten integriert werden und an das Endgerät (UE) übertragen werden.

4. Verfahren nach einem der vorhergehenden Ansprüche, bei dem die Extraktion der SIP-Authentifizierungsdaten in einem oder mehreren SIP-Proxy-CSCF-, SIP-Proxy-Call State Control Function, und RADIUS- und/oder Diameter-Servern erfolgt.

5. Verfahren nach einem der vorhergehenden Ansprüche, bei dem die SIP-Authentifizierungsdaten mit einem Authentifizierungsmechanismus ausgewählt aus Kerberos, Digest, AKA, USIM erzeugt werden.

6. Verfahren nach einem der vorhergehenden Ansprüche, bei dem in den WLAN-Nachrichten spezifische Nachrichten über mögliche Datenverbindungen des Endgeräts (UE) via dem Zugangsknoten (AP) zu mit dem WLAN-Netz (1) verbindbaren Datennetzen (2, 3) übertragen werden.

7. Verfahren nach Anspruch 6, bei dem die spezifischen Nachrichten ausgewertet werden und in Abhängigkeit von der Auswertung entschieden wird, ob und welche Datenverbindung des Endgerät (UE) via dem Zugangsknoten (AP) zu mit dem WLAN-Netz (1) verbindbaren Datennetzen (2, 3) zur Datenübertragung verwendet wird.

8. Verfahren nach einem der vorhergehenden Ansprüche, bei dem die spezifischen Nachrichten Anfragen und/oder Informationen bezüglich einer oder mehrerer Datenverbindungsarten und/oder Datenverbindungs-qualitäten und/oder Datenverbindungskosten und/oder von der Datenverbindung bereitgestellter Dienste beinhalten.

9. Verfahren nach einem der vorhergehenden Ansprüche, bei dem die spezifischen Nachrichten in den WLAN-Nachrichten getunnelt werden.

10. Verfahren nach einem der vorhergehenden Ansprüche, bei dem die spezifischen Nachrichten innerhalb der SIP-Nachrichten übertragen werden, wobei die SIP-Nachrichten SDP-Nachrichten, Session Description Protocol Nachrichten, beinhalten, in denen wenigstens ein Teil der spezifischen Nachrichten gespeichert sind.

11. Verfahren nach Anspruch 10, bei dem die spezifischen Nachrichten Probe-Request- und/oder Probe-Response- Nachrichten des WLAN-Protokolls sind.

12. Verfahren nach Anspruch 10, bei dem die Spezifischen Nachrichten neu im WLAN-Protokoll definierte Nachrichten sind.

13. Verfahren nach einem der vorhergehenden Ansprüche, bei dem die WLAN-Nachrichten Nachrichten gemäß dem WLAN-Standard IEEE 802.11 sind.

14. Verfahren nach einem der vorhergehenden Ansprüche, bei dem die mit dem WLAN-Netz (1) verbindbaren Datennetze (2, 3) ein oder mehrere 3GPP- und/oder IP-Netze umfassen.

15. Vorrichtung zur Übertragung von Daten in einem WLAN-Netz (1), umfassend
- einen Zugangsknoten (AP), wobei zwischen dem Zugangsknoten (AP) und einem Endgerät (UE) WLAN-Nachrichten in der Layer 2 -Protokoll-Schicht übertragbar sind und die WLAN-Nachrichten SIP-Nachrichten, Session Initiation Protocol Nachrichten, mit SIP-Authentifizierungsdaten beinhalten, wobei die SIP-Nachrichten in EAP-Nachrichten, Extensible Authentication Protocol Nachrichten, enthalten sind,
- eine mit dem Zugangsknoten (AP) verbundene Recheneinheit zur Extraktion der SIP-Authentifizierungsdaten aus in dem Zugangsknoten (AP) ankommenden WLAN-Nachrichten und zur Integration der extrahierten SIP-Authentifizierungsdaten in Nachrichten des RADIUS- und/oder Diameter-Protokolls.

16. Vorrichtung nach Anspruch 15, bei dem die Recheneinheit einen SIP-Proxy-CSCF-Server, SIP-Proxy Call State Control Function Server und einen RADIUS- und/oder Diameter-Server umfasst.

17. Vorrichtung nach Anspruch 15 oder 18, bei dem die Recheneinheit in dem Zugangsknoten integriert ist.

18. Datennetz umfassend ein WLAN-Netz (1) und die ein oder mehreren mit dem WLAN-Netz (1) verbindbaren Datennetze (2, 3), wobei das WLAN Netz derart ausgestaltet ist, dass ein Verfahren nach einem der Ansprüche 1 bis 14 durchgeführt wird.

## Claims

1. A method for transmitting data in a WLAN network (1), wherein
- WLAN messages are transmitted in the Layer 2 protocol layer between a terminal device (UE) and an access node (AP) of the WLAN network (1), the access node (AP) being connectable to one or more data networks (2, 3);
- the WLAN messages contain SIP messages, Session Initiation Protocol messages with SIP authentication data, the SIP messages being contained in EAP messages, Extensible Authentication Protocol messages;
- the SIP authentication data is extracted from WLAN messages arriving in the access node (AP) and integrated as authentication data into messages of the RADIUS and/or Diameter protocol.

2. The method as claimed in claim 1, wherein the authentication data integrated in the RADIUS and/or Diameter protocol is transmitted in a data network (2, 3) that can be connected to the WLAN network (1) to a RADIUS and/or Diameter server.

3. The method as claimed in claim 1 or 2, wherein authentication data of the RADIUS and/or Diameter protocol arriving in the access node (AP) from a data network that can be connected to the WLAN network is integrated into SIP messages as SIP authentication data and transmitted to the terminal device (UE).

4. The method as claimed in one of the preceding claims, wherein the SIP authentication data is extracted in one or more SIP Proxy CSCF, SIP Proxy Call State Control Function and RADIUS and/or Diameter servers.

5. The method as claimed in one of the preceding claims, wherein the SIP authentication data is generated using an authentication mechanism chosen from Kerberos, Digest, AKA, USIM, etc.

6. The method as claimed in one of the preceding claims, wherein specific messages concerning possible data connections of the terminal device (UE) are transmitted in the WLAN messages via the access node (AP) to data networks (2, 3) that can be connected to the WLAN network (1).

7. The method as claimed in claim 6, wherein the specific messages are evaluated and, depending on the results of the evaluation, it is decided whether the data connection is possible and/or which data connection of the terminal device (UE) via the access node (AP) will be used for the data transmission to data networks (2, 3) that can be connected to the WLAN network (1).

8. The method as claimed in one of the preceding claims, wherein the specific messages contain inquiries and/or information relating to one or more data connection types and/or qualities of data connection and/or data connection costs and/or services provided by the data connection.

9. The method as claimed in one of the preceding claims, wherein the specific messages are tunneled in the WLAN messages.

10. The method as claimed in one of the preceding claims, wherein the specific messages are transmitted within the SIP messages, the SIP messages containing SDP messages, Session Description Protocol messages, in which at least some of the specific messages are stored.

11. The method as claimed in claim 10, wherein the specific messages are Probe Request and/or Probe Response messages of the WLAN protocol.

12. The method as claimed in claim 10, wherein the specific messages are messages newly defined in the WLAN protocol.

13. The method as claimed in one of the preceding claims, wherein the WLAN messages are messages conforming to the WLAN standard IEEE 802.11.

14. The method as claimed in one of the preceding claims, wherein the data networks (2, 3) that can be connected to the WLAN network (1) comprise one or more 3GPP and/or IP networks.

15. A device for transmitting data in a WLAN network (1), comprising
- an access node (AP), whereby WLAN messages can be transmitted between the access node (AP) and a terminal device (UE) in the Layer 2 protocol layer and the WLAN messages contain SIP messages, Session Initiation Protocol messages, with SIP authentication data, the SIP messages being contained in EAP messages, Extensible Authentication Protocol messages,
- a computing unit connected to the access node (AP) for the purpose of extracting the SIP authentication data from WLAN messages arriving in the access node (AP) and for integrating the extracted SIP authentication data into messages of the RADIUS and/or Diameter protocol.

16. The device as claimed in claim 15, wherein the computing unit comprises a SIP Proxy CSCF server, SIP Proxy Call State Control Function server, and a RADIUS and/or Diameter server.

17. The device as claimed in claim 15 or 16, wherein the computing unit is integrated in the access node.

18. A data network comprising a WLAN network (1) and the one or more data networks (2, 3) that can be connected to the WLAN network (1), wherein the WLAN network is embodied in such a way that a method according to one of the claims 1 to 14 is performed.

## Revendications

1. Procédé de transmission de données dans un réseau WLAN (1) dans lequel
- des messages WLAN sont transmis dans la couche de protocole Layer 2 entre un terminal (UE) et un noeud d'accès (AP) du réseau WLAN (1), le noeud d'accès (AP) étant connectable à un ou plusieurs réseaux de données (2, 3);
- les messages WLAN contiennent des messages SIP, messages Session Initiation Protocol, avec des données d'authentification SIP, les messages SIP étant contenus dans des messages EAP, messages Extensible Authentification Protocol;
- les données d'authentification SIP sont extraites hors de messages WLAN arrivant dans le noeud d'accès (AP) et sont intégrées en tant que données d'authentification dans des messages du protocole RADIUS et/ou Diameter.

2. Procédé selon la revendication 1, dans lequel les données d'authentification intégrées dans le protocole RADIUS et/ou Diameter sont transmises dans un réseau de données (2, 3) connectable au réseau WLAN (1) vers un serveur RADIUS et/ou Diameter.

3. Procédé selon la revendication 1 ou 2, dans lequel des données d'authentification du protocole RADIUS et/ou Diameter qui arrivent dans le noeud d'accès (AP) à partir d'un réseau de données connectable au réseau WLAN sont intégrées en tant que données d'authentification SIP dans des messages SIP et transmises au terminal (UE).

4. Procédé selon l'une des revendications précédentes, dans lequel l'extraction des données d'authentification SIP se fait dans un ou plusieurs serveurs SIP proxy CSCF, SIP proxy Call State Control Function, et RADIUS et/ou Diameter.

5. Procédé selon l'une des revendications précédentes, dans lequel les données d'authentification SIP sont générées avec un mécanisme d'authentification sélectionné parmi Kerberos, Digest, AKA, USIM.

6. Procédé selon l'une des revendications précédentes, dans lequel des messages spécifiques concernant des connexions de données possibles du terminal (UE) sont transmis, dans les messages WLAN, via le noeud d'accès (AP) vers des réseaux de données (2, 3) connectables au réseau WLAN (1).

7. Procédé selon la revendication 6, dans lequel les messages spécifiques sont évalués et il est décidé, en fonction de l'évaluation, si et quelle connexion de données du terminal (UE) est utilisée via le noeud d'accès (AP) vers des réseaux de données (2, 3) connectables au réseau WLAN
(1) aux fins de la transmission de données.

8. Procédé selon l'une des revendications précédentes, dans lequel les messages spécifiques contiennent des requêtes et/ou des informations concernant un ou plusieurs types de connexions de données et/ou qualités de connexions de données et/ou coûts de connexions de données et/ou services fournis par la connexion de données.

9. Procédé selon l'une des revendications précédentes, dans lequel les messages spécifiques sont tunnelés dans les messages WLAN.

10. Procédé selon l'une des revendications précédentes, dans lequel les messages spécifiques sont transmis à l'intérieur des messages SIP, les messages SIP contenant des messages SDP, messages Session Description Protocol, dans lesquels est stockée au moins une partie des messages spécifiques.

11. Procédé selon la revendication 10, dans lequel les messages spécifiques sont des messages probe-request et/ou des messages probe-response du protocole WLAN.

12. Procédé selon la revendication 10, dans lequel les messages spécifiques sont des messages nouvellement définis dans le protocole WLAN.

13. Procédé selon l'une des revendications précédentes, dans lequel les messages WLAN sont des messages selon le standard WLAN IEEE 802.11.

14. Procédé selon l'une des revendications précédentes, dans lequel les réseaux de données (2, 3) connectables au réseau WLAN (1) comprennent un ou plusieurs réseaux 3GPP et/ou IP.

15. Dispositif de transmission de données dans un réseau WLAN (1), comprenant
- un noeud d'accès (AP), des messages WLAN étant transmissibles entre le noeud d'accès (AP) et un terminal (UE) dans la couche de protocole Layer 2 et les messages WLAN comprenant des messages SIP, messages Session Initiation Protocol, avec des données d'authentification SIP, les messages SIP étant contenus dans des messages EAP, messages Extensible Authentification Protocol;
- une unité de calcul connectée au noeud d'accès (AP) pour extraire les données d'authentification SIP hors de messages WLAN arrivant dans le noeud d'accès (AP) et pour intégrer dans des messages du protocole RADIUS et/ou Diameter les données d'authentification SIP qui sont extraites.

16. Dispositif selon la revendication 15, dans lequel l'unité de calcul comprend un serveur SIP proxy CSCF, serveur SIP proxy Call State Control Function, et un serveur RADIUS et/ou Diameter.

17. Dispositif selon la revendication 15 ou 16, dans lequel l'unité de calcul est intégrée dans le noeud d'accès.

18. Réseau de données comprenant un réseau WLAN (1) et l'un ou les plusieurs réseaux de données (2, 3) connectables au réseau WLAN (1), le réseau WLAN étant aménagé de manière telle qu'un procédé selon l'une des revendications 1 à 14 est mis en oeuvre.
